(19) Europäisches Patentamt
European Patent Office
Office européen des brevets

(11) **EP 2 385 619 A2**

(12) # EUROPEAN PATENT APPLICATION

(43) Date of publication:
**09.11.2011 Bulletin 2011/45**

(51) Int Cl.:
*H02M 7/537* $^{(2006.01)}$

(21) Application number: **11158171.6**

(22) Date of filing: **15.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.05.2010 JP 2010106991**

(71) Applicant: **Panasonic Corporation
Kadoma-shi
Osaka 571-8501 (JP)**

(72) Inventors:
• **Tomita, Kenzirou
  Osaka 540-6207 (JP)**
• **Kameda, Koji
  Osaka 540-6207 (JP)**

(74) Representative: **Schwabe - Sandmair - Marx
Patentanwälte
Stuntzstraße 16
81677 München (DE)**

(54) **Motor drive apparatus**

(57)     A motor drive apparatus of the invention includes an inverter circuit for converting a DC power into an AC power, a plurality of motors driven by the inverter circuit, a load relay for switching an output from the inverter circuit to the plurality of motors, a current detecting unit for detecting a motor current; and a control unit for controlling the motors according to a current signal from the current detecting unit. The current detecting unit comprises a shunt resistance and a current detecting IC including a differential amplifying circuit with a changeable gain, and the control unit controls the motors by switching the load relay and the gain of the current detecting IC. In this manner, the current detecting unit is reduced in size, and a reduction in size, a reduction in number of components, and a reduction in cost of the motor drive apparatus can be realized.

FIG. 1

**Description**

**BACKGROUND OF THE INVENTION**

**1. Field of the Invention**

The present invention relates to a motor drive apparatus for a washing machine or the like in which a plurality of motors are driven by an inverter circuit.

**2. Background Art**

As a conventional control apparatus for a 3-phase synchronous motor (hereinafter, abbreviated as a "motor") such as a 3-phase induction motor or a brushless motor, an inverter circuit is generally used.

A control circuit arranged in the control apparatus detects a winding current of a motor by the following method to control a rotating speed of the motor.

A first method is a method of directly detecting a winding current of a motor by using a current detector such as a hall sensor on a cable run (wire) connected to a winding of the motor. In general, 2 circuits are frequently used in a three-phase motor. According to this method, a winding current of a motor can be accurately detected. In a hall sensor using a hall element, insulation between a winding of a motor and a control circuit is possible.

However, a current detector (or a detecting circuit) has a relatively large size and is expensive. For this reason, in general, the first method is used in a control apparatus such as a control circuit for an industrial servo motor which is required to be accurately controlled.

A second method is a method of amplifying voltage drop of a shunt resistor for detecting a current serially inserted on a negative power supply side of a switching element of a - (negative) side of an inverter circuit to detect a winding current of a motor. More specifically, according to the method, a winding current of the motor is detected by a change in current flowing in the shunt resistor at ON/OFF timings of switching elements or the like of the inverter circuit. In this case, since a timing at which a current is detected is necessarily controlled in the control circuit, and the control circuit is generally controlled by a microcomputer or the like. At this time, since a potential of a detected signal is a negative potential of the inverter circuit, no problem is posed when the control circuit is placed at the same potential. However, when the control circuit is placed at a potential insulated from the inverter circuit, some insulating circuit is necessary.

However, according to the second method, a current detecting circuit can be configured at relatively low cost. For this reason, the second method is popularly used in control of an inverter for driving an industrial 3-phase induction motor or a home-use electric motor for a washing machine, an air conditioner, or the like.

The second method is disclosed in, for example, Unexamined Japanese Patent Publication No. 2008-054812 (Patent Literature 1).

A motor drive apparatus used in the heat pump laundry and washing and drying machine disclosed in Patent Literature 1 will described below with reference to the drawings.

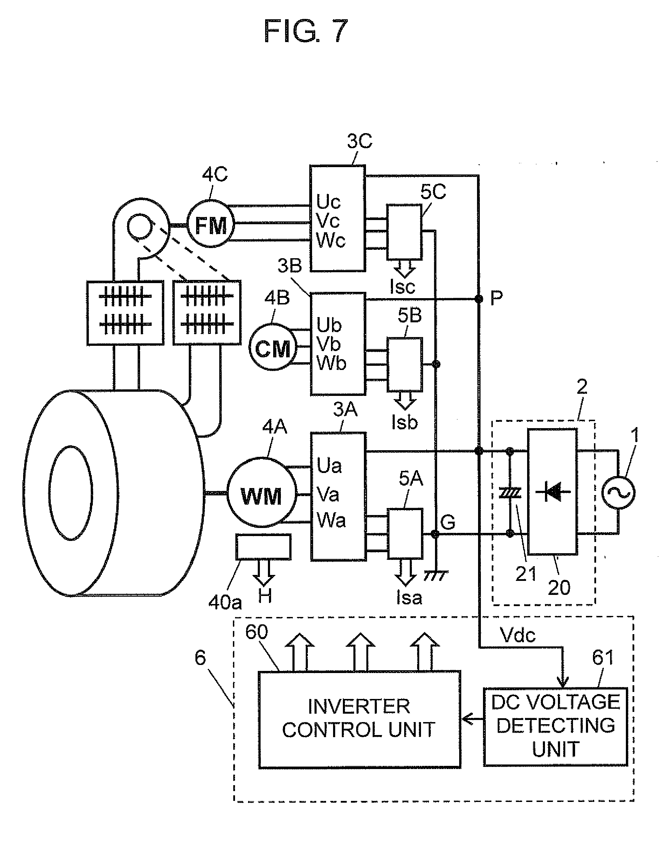

Fig. 7 is a block diagram showing a conventional motor drive apparatus. As shown in Fig. 7, the motor drive apparatus includes at least, AC power supply 1, rectifying circuit 2, a plurality of inverter circuits, control unit 6, and a plurality of motors. Rectifying circuit 2 includes full-wave rectifying circuit 20 and electrolytic capacitor 21 and converts an AC power into a DC power to configure a DC power supply. The plurality of inverter circuits include first inverter circuit 3A, second inverter circuit 3B, and third inverter circuit 3C, and convert the DC power obtained by rectifying circuit 2 into a 3-phase AC power. The plurality of motors include, for example, rotating drum drive motor 4A, heat pump compressor motor 4B, and blower fan motor 4C, and the like. The plurality of motors are driven by 3-phase AC powers obtained by first inverter circuit 3A, second inverter circuit 3B, and third inverter circuit 3C, respectively.

Control unit 6 has inverter control unit 60 and DC voltage detecting unit 61 and detects and controls currents of the motors. More specifically, DC voltage detecting unit 61 detects currents Isa, Isb, and Isc of the motors by first current detecting unit 5A, second current detecting unit 5B, and third current detecting unit 5C connected to emitter terminals of lower arm switching transistors of first inverter circuit 3A, second inverter circuit 3B, and third inverter circuit 3C. Inverter control unit 60 is configured by a high-speed processor such as a microcomputer which includes a plurality of PWM control units (not shown) which PWM-control first inverter circuit 3A, second inverter circuit 3B, and third inverter circuit 3C and a plurality of high-speed A/D converters (not shown), and simultaneously controls first inverter circuit 3A, second inverter circuit 3B, and third inverter circuit 3C. In this manner, rotating drum drive motor 4A, compressor motor 4B, and blower fan motor 4C are controlled at different rotating speeds, respectively.

First inverter circuit 3A controls rotating drum drive motor 4A by position H of a permanent magnet of a rotor of rotating drum drive motor 4A detected by position detecting unit 40a and current Isa of a motor of rotating drum drive motor 4A detected by first current detecting unit 5A.

Like first inverter circuit 3A, second inverter circuit 3B controls compressor motor 4B, and third inverter circuit 3C controls blower fan motor 4C.

First current detecting unit 5A, second current detecting unit 5B, and third current detecting unit 5C detect currents of a motor by a 3-shunt current detecting system configured by three shunt resistors and a current signal amplifying unit. The basic configurations of first current detecting unit 5A, second current detecting unit 5B, and third current detecting unit 5C are exactly the same, and only have a shunt resistance varying depending on a current of the motor.

More specifically, first current detecting unit 5A, second current detecting unit 5B, and third current detecting unit 5C are configured such that one terminals of shunt resistors are connected to emitter terminals (Nu, Nv, and Nw) of lower arm transistors of a full-bridge 3-phase inverter circuit and other terminals of the shunt resistors are connected to a negative G (GND) terminal of a DC power supply. The system is called a 3-shunt system because the system is configured by three shunt resistors.

An inverter circuit of a conventional motor drive apparatus will be described below in detail with reference to the drawings.

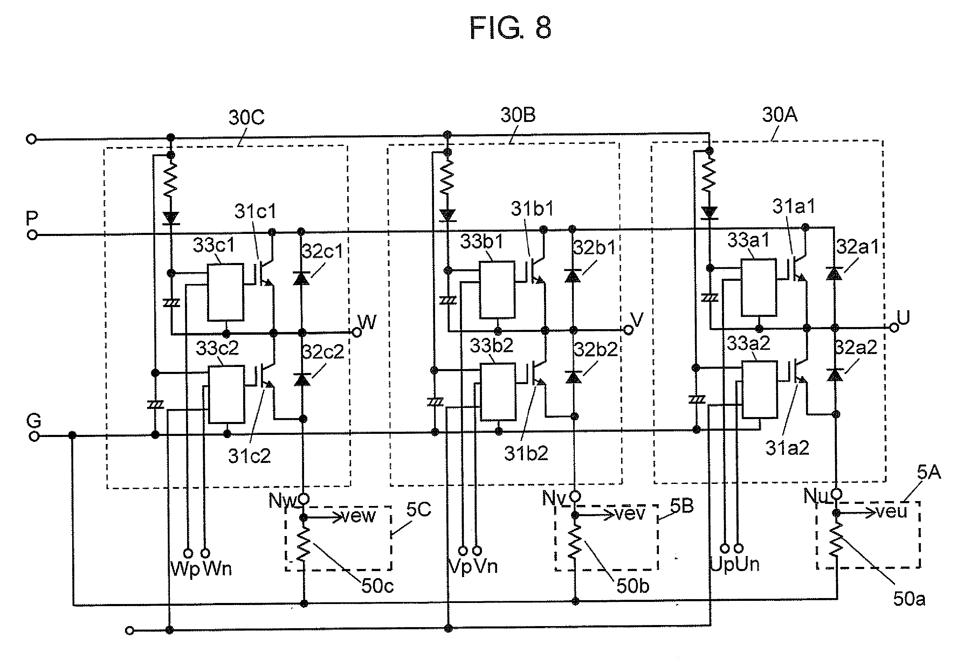

Fig. 8 is a circuit diagram of an inverter circuit of a conventional motor drive device. As shown in Fig. 8, the inverter circuit is configured by a power module including U-phase arm 30A, V-phase arm 30B, W-phase arm 30C, and a control IC (not shown).

U-phase arm 30A is configured such that a parallel connector body between upper arm transistor 31a1 configured by an insulating gate bipolar transistor (hereinafter, abbreviated as an "IGBT") and anti-parallel diode 32a1 and a parallel connector body between lower arm transistor 31a2 configured by an IGBT and anti-parallel diode 32a2 are connected in series with each other. The collector terminal of upper arm transistor 31a1 is connected to terminal P on a positive potential side of the DC power supply, and the emitter terminal of upper arm transistor 31a1 is connected to output terminal U to the motor. Furthermore, emitter terminal Nu of lower arm transistor 31a2 is connected to terminal G on a negative potential side of the DC power supply through U-phase shunt resistor 50a configuring first current detecting unit 5A.

Upper arm transistor 31a1 is driven by upper arm drive signal Up through upper arm gate drive circuit 33a1, and lower arm transistor 31a2 is switching-controlled by lower arm drive signal Un through lower arm gate drive circuit 33a2.

Similarly, V-phase arm 30B is configured such that a parallel connector body between upper arm transistor 31b1 and anti-parallel diode 32b1 and a parallel connector body between lower arm transistor 31b2 and anti-parallel diode 32b2 are connected in series with each other. The collector terminal of upper arm transistor 31b1 is connected to terminal P on a positive potential side of the DC power supply, and the emitter terminal of upper arm transistor 31b1 is connected to output terminal V to the motor. At this time, upper arm transistor 31b1 is driven by upper arm drive signal Vp through upper arm gate drive circuit 33b1, and lower arm transistor 31b2 is switching-controlled by lower arm drive signal Vn through lower arm gate drive circuit 33b2.

W-phase arm 30C is configured such that a parallel connector body between upper arm transistor 31c1 and anti-parallel diode 32c1 and a parallel connector body between lower arm transistor 31c2 and anti-parallel diode 32c2 are connected in series with each other. The collector terminal of upper arm transistor 31c1 is connected to terminal P on a positive potential side of the DC power supply, and the emitter terminal of upper arm transistor 31c1 is connected to output terminal W to the motor. At this time, upper arm transistor 31c1 is driven by upper arm drive signal Wp through upper arm gate drive circuit 33c1, and lower arm transistor 31c2 is switching-controlled by lower arm drive signal Wn through lower arm gate drive circuit 33c2.

Like U-phase arm 30A, emitter terminals Nv and Nw of lower arm transistors 31b2 and 31c2 of V-phase arm 30B and W-phase arm 30C are connected to one terminals of V-phase shunt resistor 50b and W-phase shunt resistor 50c constituting second current detecting unit 5B and third current detecting unit 5C. The other terminals of V-phase shunt resistor 50b and W-phase shunt resistor 50c are connected to terminal G on a negative potential side of the DC power supply.

The lower arm transistor is configured by an IGBT or a power MOSFET to make it possible to perform switching control by control of a gate voltage. At this time, when a resistance is set such that a voltage generated by a shunt resistor connected to an emitter terminal of an IGBT or a source terminal of a power MOSFET is 1 V or less, the lower arm transistor can be switching-controlled by controlling the gate voltage without much influence on a switching operation. As a result, voltage veu of U-phase shunt resistor 50a, voltage vev of V-phase shunt resistor 50b, and voltage vew of W-phase shunt resistor 50c are detected to make it possible to detect an output current from an inverter circuit, i.e., a current of a motor.

A current signal amplifying unit of current detecting unit 5 which amplifies a current of a motor detected by a shunt resistor in a conventional motor drive apparatus will be described below with reference to the drawings.

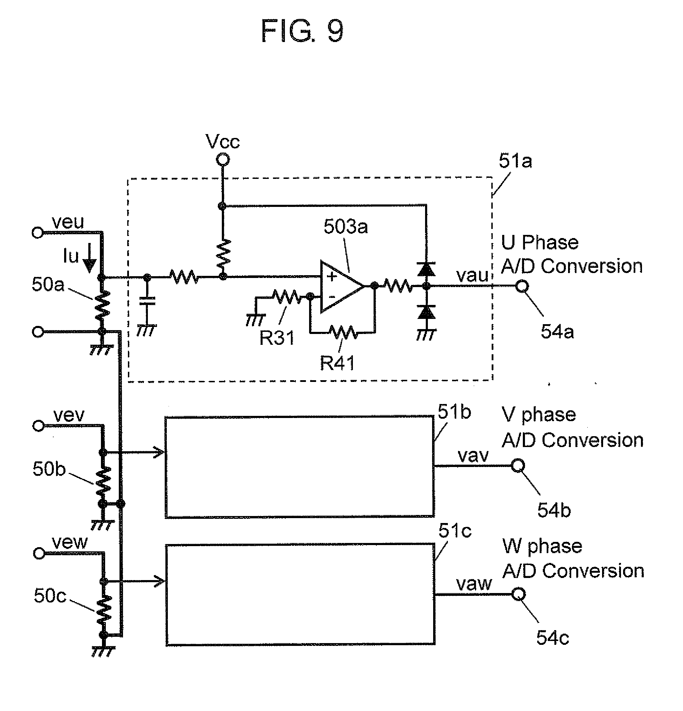

Fig. 9 is a circuit diagram of an amplifying circuit of a current signal amplifying unit of a current detecting unit 5 of the conventional motor drive apparatus.

As shown in Fig. 9, current signal amplifying units 51a, 51b, and 51c convert current signals detected by U-phase shunt resistor 50a, V-phase shunt resistor 50b, and W-phase shunt resistor 50c into voltages by non-inversion amplifier 503a and output the voltages to control unit 6 through U-phase output terminal 54a, V-phase output terminal 54b and W-phase output terminals 54c. At this time, the converted voltages are converted into voltages at DC voltage levels which can be detected by an A/D converter built in a processor such as a microcomputer of control unit 6, and the resultant voltages are output.

However, first current detecting unit 5A of the conventional motor drive apparatus is configured by: U-phase shunt resistor 50a, V-phase shunt resistor 50b, and W-phase shunt resistor 50c which detect a current of a motor as a voltage; non-inversion amplifier 503a such as an operational amplifier; a plurality of resistors R31 and R41 which determine a gain of non-inversion amplifier 503a; and current signal amplifying unit 51a configured by components such as a capacitor and a diode. Second current detecting unit 5B and third current detecting unit 5C are similarly configured. For this reason, a large number of constituent components and a large mounting area are required, which increases the cost.

For this reason, in general, the current detecting unit having the above configuration is made into a module by, for example, a hybrid IC or the like. Although the current detecting unit can be reduced in size to some extent by making it into a module, a further reduction in size is limited, and the cost, also cannot be reduced.

An amplifier of the conventional motor drive apparatus has a fixed resistance and a constant current gain. However, since current values required for motors to be driven are different from each other, an apparatus having a plurality of motors requires a current detecting unit for each of the motors. For this reason, a mounting area for the current detecting units cannot be reduced.

## SUMMARY OF THE INVENTION

A motor drive apparatus according to the present invention includes an inverter circuit for converting a DC power into an AC power, a plurality of motors driven by the inverter circuit, a load relay for switching an output from the inverter circuit to the plurality of motors, a current detecting unit for detecting a motor current; and a control unit for controlling the motors according to a current signal from the current detecting unit. The current detecting unit comprises a shunt resistance and a current detecting IC including a differential amplifying circuit with a changeable gain, and the control unit controls the motors by switching the load relay and the gain of the current detecting IC. In this manner, by the reduction in size of the current detecting unit and the reduction of the mounting area, a reduction in size, a reduction in number of components, and a motor drive apparatus with a low cost can be realized.

A motor drive apparatus according to the present invention includes an inverter circuit for converting a DC power into an AC power, a motor driven by the inverter circuit, a current detecting unit for detecting a motor current and a control unit for controlling the motor according to a current signal from the current detecting unit. The current detecting unit comprises a shunt resistance and a current detecting IC including a differential amplifying circuit with a changeable gain and the control unit controls the motor by switching the gain of the current detecting IC according to a target current value of the motor. In this manner, even though a load (target current value) of the motor changes, by switching gains of the differential amplifying circuit of current detecting IC, make it possible to control the motor. As a result, optimum motor drive control can be realized by a configuration having a small number of components.

## BRIEF DESCRIPTION OF DRAWINGS

Fig. 1 shows a system block diagram of a motor drive apparatus according to a first embodiment of the present invention.
Fig. 2 shows a main block diagram of the periphery of a current detecting unit of the motor drive apparatus.
Fig. 3 shows a circuit block diagram of a current detecting IC constituting the current detecting unit of the motor drive apparatus.
Fig. 4 shows a flow chart of an inverter washing machine according to a second embodiment of the present invention in a bath pump driving state.
Fig. 5 shows a system block diagram of an inverter washing machine or the like using a motor drive apparatus according to a third embodiment of the present invention.
Fig. 6 shows a flow chart of an inverter washing machine or the like using the motor drive apparatus in a fan motor drive state.
Fig. 7 shows a block diagram showing a conventional motor drive apparatus.
Fig. 8 shows a circuit diagram of an inverter circuit of a conventional motor drive device.
Fig. 9 shows a circuit diagram of an amplifying circuit of a current signal amplifying unit of a current detecting unit of the conventional motor drive apparatus.

## DETAILED DESCRIPTION OF THE INVENTION

Embodiments of the present invention will be described below with reference to the drawings. Note that the present invention is not limited to the embodiments.

## (FIRST EMBODIMENT)

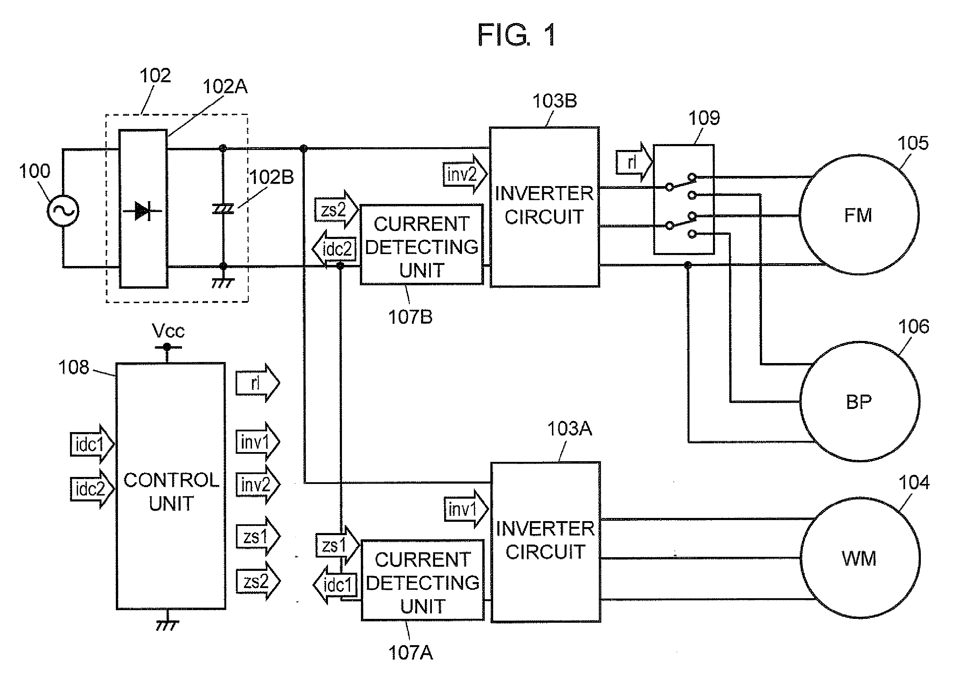

Fig. 1 is a system block diagram of a motor drive apparatus according to a first embodiment of the present invention. The motor drive apparatus according to the first embodiment is used in, for example, an inverter washing machine.

As shown in Fig. 1, the motor drive apparatus includes at least AC power supply 100, rectifying circuit 102, inverter circuits 103A and 103B, current detecting units 107A and 107B, control unit 108, load relay 109, washing machine motor (WM) 104, fan motor (FM) 105, and bath pump (BP) 106. Rectifying circuit 102 includes full-wave rectifying circuit 102A and electrolytic capacitor 102B, and converts an AC power from AC power supply 100 into a DC power to configure a DC power supply. Inverter circuit 103A drives washing machine motor 104 which performs washing, rinsing, spin-drying, or the like. Inverter circuit 103B drives fan motor 105 which circulates air and a bath pump 106 which supplies bathwater for washing.

Current detecting unit 107A outputs current signal idc1 from the inverter circuit 103A differentially amplified at a gain set by gain setting signal zs1 from control unit 108 configured by a microcomputer or the like to control unit 108. Control unit 108 receives current signal idc1 and outputs drive signal inv1 which drives washing machine motor 104 under optimum conditions to the inverter circuit 103A.

Similarly, current detecting unit 107B outputs current signal idc2 from inverter circuit 103B differentially amplified at a gain set by gain setting signal zs2 from control unit 108 to control unit 108. Control unit 108 receives current signal idc2 and outputs drive signal inv2 which drives fan motor 105 under optimum conditions to inverter circuit 103B.

Control unit 108 determines, for example in a washing step, whether fan motor 105 is driven or bath pump 106 is driven and outputs switching signal rl to load relay 109. According to switching signal rl, an output from inverter circuit 103B is switched to fan motor 105 or bath pump 106 by load relay 109 to drive fan motor 105 or bath pump 106. Thus, the motor drive apparatus according to the first embodiment is configured.

A current detecting unit of the motor drive apparatus according to the first embodiment will be described below in detail with reference to the drawings.

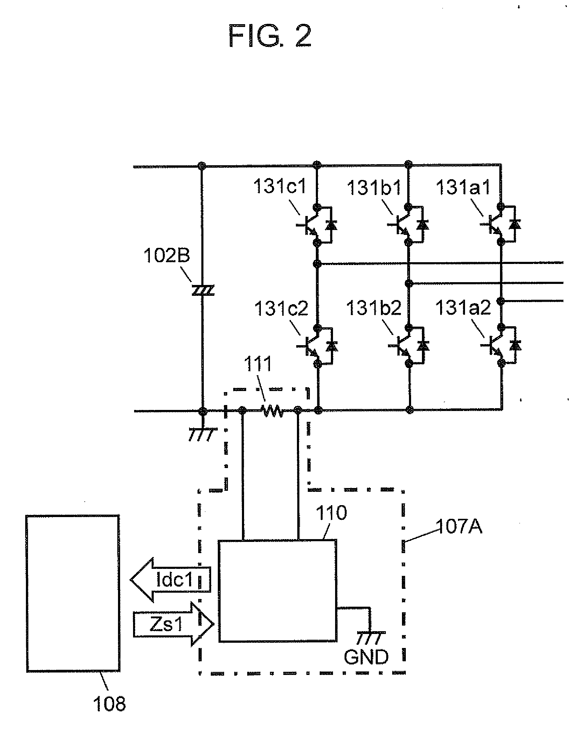

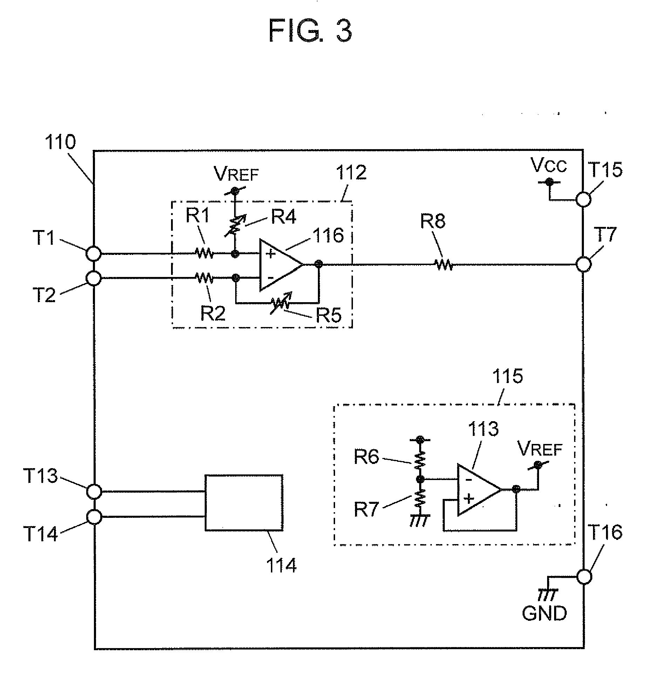

Fig. 2 is a main block diagram of the periphery of the current detecting unit of the motor drive apparatus according to the first embodiment. Fig. 2 shows a case in which washing machine motor 104 in Fig. 1 is driven by way of example. Fig. 3 is a circuit block diagram of a current detecting IC constituting the current detecting unit of the motor drive apparatus.

As shown in Fig. 2, an inverter circuit for driving a 3-phase motor is configured by a total of 6 switching elements, i.e., 3 parallel arranged sets of pairs of upper arm switching element 131a1 and lower arm switching element 131a2, upper arm switching element 131b1 and lower arm switching element 131b2, and upper arm switching element 131c1 and lower arm switching element 131c2 each pair of which are connected in series with each other. At this time, as the switching element, for example, an IGBT is used.

A connection point between one pair of switching elements is connected to, for example, an emitter side (lower side) of upper arm switching element 131a1 and a collector side (upper side) of lower arm switching element 131a2 and connected to a motor (not shown). Furthermore, all the emitter sides of lower arm switching elements 131a2, 131b2, and 131c2 are commonly connected and connected to shunt resistor 111 serving as a resistor for detecting a current.

Both the ends of shunt resistor 111 are connected to current detecting IC 110, and current detecting unit 107A is configured by shunt resistor 111 and current detecting IC 110.

As shown in Figs. 2 and 3, current detecting IC 110 causes amplifier 116 of differential amplifying circuit 112 to amplify a voltage across both ends of shunt resistor 111 and outputs the voltage from output terminal 7 to control unit 108 as analog current signal idc1. Current signal idc1 input to control unit 108 is A/D-converted and used in speed control or torque control, or the like of each of the motors as a current detecting value.

Current detecting IC 110 having a differential amplifying circuit will be described below in detail with reference to Fig. 3.

As shown in Fig. 3, both the ends of shunt resistor 111 of an inverter circuit are connected to input terminals T1 and T2 of current detecting IC 110. The following description will be made on the assumption that input terminal T1 is connected to a right side (emitter side of a lower arm switching element such as an IGBT) of shunt resistor 111 shown in Fig. 2, and that input terminal T2 is connected to a left side (electrolytic capacitor 102B side) of shunt resistor 111 shown in Fig. 2.

In this case, an input voltage to input terminal T1 is represented by $V_{T1}$ [V], an input voltage to input terminal T2 is represented by $V_{T2}$ [V], an output voltage to output terminal T7 is represented by $V_{OUT}$ [V], a reference voltage on a $V_{REF}$ side of resistor R4 is represented by $V_{REF}$ [V], and resistances of resistors R1, R2, R4, and R5 are represented by $R_1$ [Ω], $R_2$ [Ω], $R_4$ [Ω], and $R_5$ [Ω]. In this case, output voltage $V_{OUT}$ [V] is given by the following equation:

$$V_{OUT} = \{(R_1 R_2 + R_1 R_5)V_{REF} + (R_2 R_4 + R_4 R_5)\, V_{T1}$$

$$+ (\cdot R_1 R_5 \cdot R_4 R_5)\, V_{T2}\}/\{R_2\, (R_1 + R_4)\} \cdots (1)$$

When a differential amplifying circuit is to be generally configured, the values of resistors R1, R2, R4, and R5 are set to satisfy $R_1 = R_2$ and $R_4 = R_5$ (or $R_1 : R_4 = R_2 : R_5$). When the relation is put in equation (1), output voltage $V_{OUT}$ [V] is given by the following equation:

$$V_{OUT} = V_{REF} + (V_{T1} \cdot V_{T2})\, R_4/R_1 \cdots (2)$$

When reference voltage $V_{REF}$ is supposed to be a virtual GND, a voltage amplified at gain $R_4/R_1$ is output to output terminal T7 with reference to the virtual GND.

In the first embodiment, a gain setting function which makes it possible to adjust or select a gain of differential amplifying circuit 112 is given to current detecting IC 110, and a gain setting terminal is arranged on current detecting IC 110.

More specifically, input terminals T13 and T14 shown in Fig. 3 are gain setting terminals and are connected to gain setting unit 114. In this case, since two input terminals T13 and T14 are present, for example, states of four types can be set by an ON/OFF signal from control unit 108. Depending on the states of four types of input terminals T13 and T14, gain setting unit 114 variably change resistances of resistors R4 and R5 of differential amplifying circuit 112. For example, when the resistances of resistors R1 and R2 are set to 40 kΩ, gain setting unit 114 variably sets the resistances of resistors R4 and R5 to 100 kΩ 200 kΩ 400 kΩ and 800 kΩ at once depending on states of input terminals T13 and T14. In this manner, the gains of differential amplifying circuit 112 are set to 2.5 times, 5 times, 10 times, and 20 times, respectively.

More specifically, when a current value of a motor to be controlled is small (for example, the current value is up to 1 A), a resistance of shunt resistor 111 for detecting a current shown in Fig. 2 is set to 1 Ω, and a gain of differential amplifying circuit 112 is set to 2.5 times. In this manner, even though the current value of the motor is small, current detection which is excellent in an S/N ratio is possible.

On the other hand, when a current value of the motor is large, a power loss of shunt resistor 111 for detecting a current becomes large. For this reason, the resistance of shunt resistor 111 is preferably lowered as much as possible. When the maximum current detection value is 20 A, for example, a resistance of shunt resistor 111 for detecting a current is set to 10 mΩ, and a gain of differential amplifying circuit 112 is set to 20 times. In this manner, current detecting unit 107A in which a power loss by shunt resistor 111 is suppressed as much as possible can be configured.

Design values of constants of the components of the motor drive apparatus in the configuration in Fig. 1 will be described below while exemplifying a case in which washing machine motor 104 having a maximum value of a drive current which is ±8 A (zero-peak) is driven.

In this case, a voltage drop by shunt resistor 111 is preferably set to 1 V or less not to influence operations of lower arm switching elements 131a2, 131b2, and 131c2 configured by, for example, IGBTs which constitute an inverter circuit. For example, when a resistance of shunt resistor 111 is set to 50 mΩ, a voltage drop by the maximum current of the motor is given by 8 A × 50 mΩ = 0.4 V·(< 1 V). As a result, even though the drive current value of the motor exceeds 8 A, the switching element of the inverter circuit can be easily driven.

When it is supposed that current signal idc1 input to control unit 108 is A/D-converted by an A/D converter of a microcomputer, a voltage which can be input is generally 0 V to 5 V. For this reason, output voltage $V_{OUT}$ of the differential amplifier is preferably set within a range of ±2.5 V with reference to 2.5 V which is a central voltage of an input voltage of the A/D converter. For this reason, reference voltage $V_{REF}$ in current detecting IC 110 is set to 2.5 V Specifically, in reference voltage generating circuit 115 configured by resistors R6 and R7 and amplifier 113 shown in Fig. 3, resistors R6 and R7 are set such that reference voltage $V_{REF}$ is 2.5 V. For example, when power supply voltage Vcc of current detecting IC 110 is +5 V, the resistances of resistor R6 and resistor R7 are made equal to each other to make it possible to set reference voltage $V_{REF}$ to 2.5 V.

In the example described above, a voltage of 0.4 V is input across input terminals T1 and T2 of current detecting IC 110 when the maximum current of the motor is 8 A. Therefore, in order to set an amplitude of a voltage of current signal idc1 to 2.5 V or less, control unit 108 outputs gain setting signal zs1 to input terminals T13 and T14 serving as the gain setting terminals of current detecting IC 110 such that the gain of differential amplifying circuit 112 of current detecting IC 110 is 5 times. In this manner, an amplitude of output terminal T7 at a maximum current of 8 A is given by 0.4 V x 5 = 2.0 V while using reference voltage $V_{REF}$ as a central value. As described above, washing machine motor 104 can be efficiently driven.

With reference to Fig. 2, a description will be given of a case in which an output of inverter circuit 103B is switched by load relay 109 depending on switching signal rl from control unit 108 to drive fan motor 105 or bath pump 106. In Fig. 2, a description will be made such that current detecting unit 107A, current signal idc1, and gain setting signal zs1 are replaced with 107B, idc2, and zs2, respectively.

At this time, as in washing machine motor 104, a case in which the maximum value of fan motor 105 and the maximum value of bath pump 106 are $\pm 2$ A and $\pm 1$ A, respectively will be described by way of example.

In this case, when a resistance of shunt resistor 111 of current detecting unit 107B is 0.2 $\Omega$, the maximum voltage drop of fan motor 105 is 0.4 V, and the maximum voltage drop of bath pump 106 is 0.2 V. For this reason, in driving of fan motor 105, control unit 108 outputs gain setting signal zs2 to input terminals T13 and T14 serving as the gain setting terminals of current detecting IC 110 such that a gain of differential amplifying circuit 112 of current detecting IC 110 is 5 times. Similarly, in driving of bath pump 106, control unit 108 outputs gain setting signal zs2 to input terminals T13 and T14 serving as the gain setting terminals of current detecting IC 110 such that a gain of differential amplifying circuit 112 of current detecting IC 110 is 10 times. In this manner, with respect to fan motor 105 or bath pump 106, as in washing machine motor 104, current detection which is excellent in an S/N ratio is performed to fan motor 105 or bath pump 106 to make it possible to accurately drive fan motor 105 or bath pump 106.

Specifically, motor drive apparatus of the first embodiment, a plurality of motors having different drive current values can be driven by one inverter circuit and one current detecting unit such that an output from inverter circuit is switched by load relay 109. Depending on drive currents of the plurality of motors, the motors can be controlled such that a gain is switched to an optimum gain and that detect a drive current. In this manner, the plurality of motors can be driven at high accuracy.

A design value of each of the constants of the components of the motor drive apparatus described above is only an example, and varies depending on conditions such as current values of the motors, an output voltage to the control circuit, and the like.

A circuit block configuration of the current detecting IC shown in Fig. 3 is an example. For example, polarities of input terminals T1 and T2 and an input to the differential amplifier and the configuration of the differential amplifier may be changed.

In the first embodiment, the current detecting unit is described as the example in which three phase currents of the inverter circuits are collectively detected. However, the current detecting unit is not limited to the example. For example, a current detecting unit may be arranged for each of the three phases. In this manner, speed control, torque control, and the like of the motors can be more accurately performed.

The first embodiment describes the example in which the gains of four types are set in the differential amplifying circuit by using the two gain setting terminals. However, the present invention is not limited to the example, and the number of gain setting terminals may be set to a number other than 2. For example, one gain setting terminal may be used, and a gain of the differential amplifying circuit may be set in 2 steps, for example, 5 times and 10 times or the like. Furthermore, three gain setting terminals may be used, and gains of 5 or more types may also be set in the differential amplifying circuit.

The first embodiment describes the example in which the gain of the differential amplifying circuit is digitally set. However, the gain of the differential amplifying circuit may be analogically set. In this case, for example, the above configuration is realized such that one gain setting terminal is used, and a resistor is connected between gain setting terminal and a circuit GND to input an analog signal, and the resistances of resistors R4 and R5 are made linearly variable by using a current-mirror circuit in gain setting unit 114 to set the gain.

As described above, according to the motor control apparatus of the present invention, with a reduction in size of the current detecting unit, the plurality of motors are switched by the load relay. For this reason, an inverter circuit and a current detecting unit need not be arranged for each of the motors. Depending on drive currents of the plurality of motors, the motors can be controlled such that a gain is switched to an optimum gain and that detect a drive current. As a result, a small-sized low-price motor control apparatus which can achieve a reduction in size, a reduction in number of components, and a reduction in cost can be realized.

(**SECOND EMBODIMENT**)

A method of driving an inverter washing machine according to a second embodiment of the present invention will be described below with reference to the drawings.

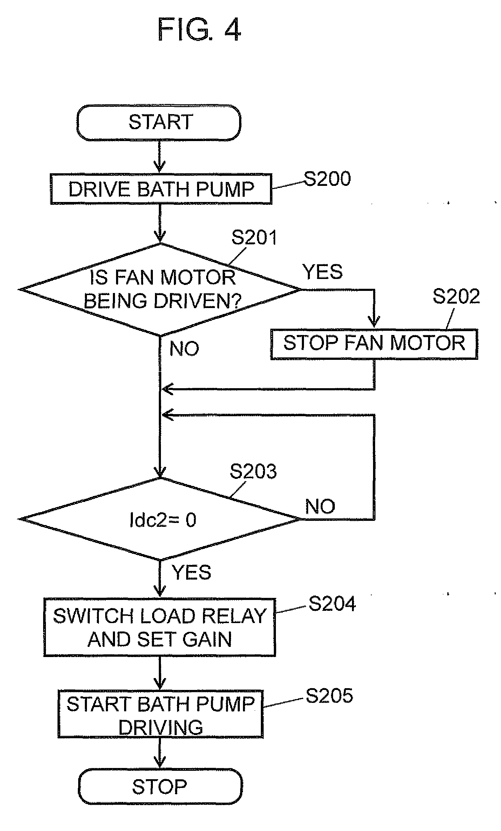

Fig. 4 is a flow chart of an inverter washing machine according to the second embodiment of the present invention in a bath pump driving state. The basic configuration of the motor drive apparatus is the same as that in the first, embodiment.

In the second embodiment, after control unit 108 stops inverter circuit 103B, load relay 109 is driven after it is confirmed that current signal idc2 from current detecting unit 107B does not change. A case in which bath pump 106 is switched from fan motor 105 and driven will be concretely described by way of example.

As shown in Fig. 4, first, it is determined whether bath pump 106 is driven (S200).

Next, when bath pump 106 is to be driven, it is determined whether fan motor 105 is being driven at present (S201). At this time, when fan motor 105 is being driven (YES in S201), fan motor 105 is stopped (S202).

Next, it is determined whether current signal idc2 from current detecting IC 110 is kept at reference voltage $V_{REF}$ without changing, i.e., a current does not flow in a motor (S203). At this time, the current flows in the motor (NO in S203), the determination in step S203 is repeated until the current flowing in the motor is stopped.

Next, when no current flows in the motor (YES in S203), control unit 108 switches load relay 109 to the bath pump 106 side and outputs gain setting signal zs2 which sets a gain of a differential amplifying circuit to 5 times to current detecting IC 110 (S204).

Control unit 108 outputs drive signal inv2 to inverter circuit 103B to start driving of bath pump 106 (S205).

According to the second embodiment, since the motor is switched after it is determined that a current does not flow in the motor, an arc current or a surge voltage which is easily generated when outputs from the inverter circuit are switched by load relay 109 can be reduced. As a result, even though the load relay is configured by an inexpensive relay or the like, damage by the load relay can be reduced to make it possible to realize a highly reliable motor drive apparatus.


**(THIRD EMBODIMENT)**

An inverter washing machine using a motor drive apparatus according to a third embodiment of the present invention will be described below with reference to the drawings.

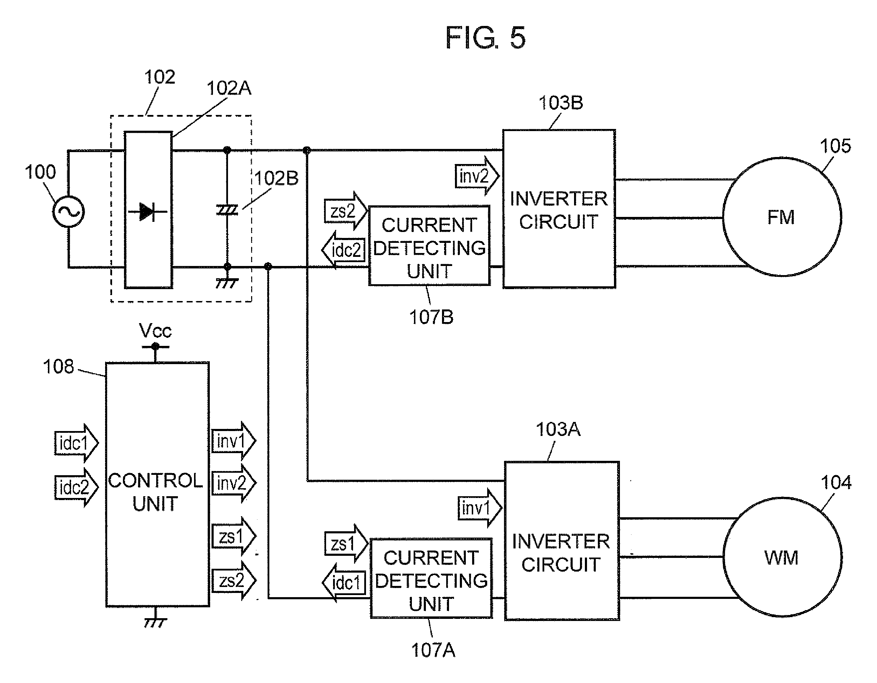

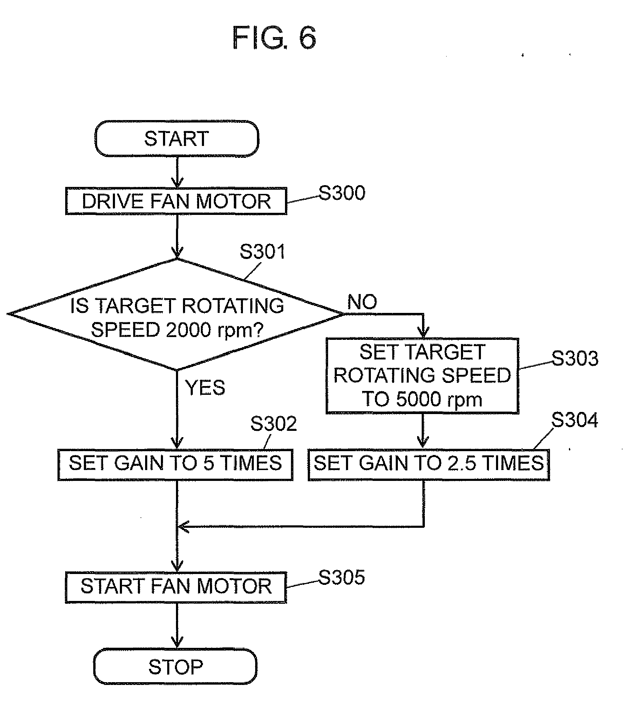

Fig. 5 is a system block diagram of the inverter washing machine using the motor drive apparatus according to the third embodiment of the present invention. Fig. 6 is a flow chart of the inverter washing machine using the motor drive apparatus in a fan motor drive state. As shown in Fig. 5, the third embodiment is obtained by omitting the load relay and the bath pump in the motor control apparatus in the first embodiment, and has other configurations and operations which are the same as those in the first embodiment. Points different from those in the first embodiment will be mainly described.

In the third embodiment, control unit 108 switches gains of the differential amplifying circuit of current detecting IC 110 depending on a target current value (target rotating speed) of fan motor 105 and drive the motor.

As shown in Fig. 6, first, it is determined whether fan motor 105 is driven (S300).

Next, when fan motor 105 is to be driven, it is determined depending on processing steps of washing whether the target rotating speed of fan motor 105 is 2000 rpm or 5000 rpm (S301). In this case, for example, when the rotating speed of fan motor 105 is 2000 rpm, the maximum value of a motor current is set to $\pm 2$ A, and the maximum value of the motor current at 5000 rpm is set to $\pm 3.5$ A. When a resistance of shunt resistor 111 is 0.2 $\Omega$, the maximum voltage drop of shunt resistor 111 is 0.7 V. More specifically, as described in the first embodiment, the voltage drop can be set to 1.0 V or less.

When the target rotating speed is 2000 rpm in step S301 (YES in S301), a gain of the differential amplifying circuit of current detecting IC 110 is set to 5 times (S302). In this manner, the range of current signal idc2 of current detecting IC 110 is $2.5 \pm 2.0$ V.

When the target rotating speed is not 2000 rpm in step S301 (NO in S301), the target rotating speed is set to 5000 rpm (S303), and a gain of the differential amplifying circuit of the current detecting IC is set to 2.5 times (S304). In this manner, the range of current signal idc2 of current detecting 1C 110 is $2.5$ V $\pm 1.75$ V.

Control unit 108 A/D-converts current signal idc2 from current detecting IC 110 and outputs drive signal inv2 corresponding to a target current value (target rotating speed) to inverter circuit 103B, and drives fan motor 105 at the target rotating speed (S305).

According to the third embodiment, even though a load (target current value) of the motor changes, the value of current signal idc2 output from current detecting IC 110 is set to the maximum amplitude falling within the range of 0 V to 5 V by switching gains of the differential amplifying circuit of current detecting IC 110 to make it possible to control the motor. As a result, current detection which is excellent in an S/N ratio is made possible, and optimum motor drive control can be realized by a configuration having a small number of components.

The third embodiment describes the configuration in which load relay 109 described in the first embodiment or the second embodiment is not used. The third embodiment is not limited to the configuration. For example, load relay 109 may be arranged, and the same effect and the same operation can be obtained.

**Claims**

1. A motor drive apparatus comprising:

   an inverter circuit for converting a DC power into an AC power;
   a plurality of motors driven by the inverter circuit;
   a load relay for switching an output from the inverter circuit to the plurality of motors;
   a current detecting unit for detecting a motor current; and
   a control unit for controlling the motors according to a current signal from the current detecting unit, wherein
   the current detecting unit comprises a shunt resistance and a current detecting IC including a differential amplifying circuit with a changeable gain , and
   the control unit controls the motors by switching the load relay and the gain of the current detecting IC.

2. The motor drive apparatus according to claim 1, wherein the control unit switches any of the load relay and the gain of the current detecting IC, when there is no change in the current signal from the current detecting unit after interruption of the inverter circuit.

3. A motor drive apparatus comprising:

   an inverter circuit for converting a DC power into an AC power;
   a motor driven by the inverter circuit;
   a current detecting unit for detecting a motor current; and
   a control unit for controlling the motor according to a current signal from the current detecting unit, wherein
   the current detecting unit comprises a shunt resistance and a current detecting IC including a differential amplifying circuit with a changeable gain , and
   the control unit controls the motor by switching the gain of the current detecting IC according to a target current value of the motor.

# FIG. 1

EP 2 385 619 A2

# FIG. 2

# FIG. 3

# FIG. 4

START

DRIVE BATH PUMP — S200

S201

IS FAN MOTOR BEING DRIVEN?

YES

NO

S202

STOP FAN MOTOR

S203

Idc2= 0

NO

YES

SWITCH LOAD RELAY AND SET GAIN — S204

START BATH PUMP DRIVING — S205

STOP

# FIG. 5

EP 2 385 619 A2

# FIG. 6

```
           ┌──────────────┐
           │    START     │
           └──────┬───────┘
                  │
         ┌────────▼─────────┐
         │ DRIVE FAN MOTOR  │────S300
         └────────┬─────────┘
                  │           S301
                  ▼
          ◇ IS TARGET ROTATING ◇──NO──┐
          ◇ SPEED 2000 rpm?    ◇      │
                  │                    ▼
                 YES          ┌─────────────────┐
                  │           │   SET TARGET    │
              S302│           │ ROTATING SPEED  │────S303
                  ▼           │  TO 5000 rpm    │
        ┌──────────────────┐ └────────┬────────┘
        │ SET GAIN TO 5 TIMES │      S304 │
        └─────────┬──────────┘          ▼
                  │         ┌────────────────────────┐
                  │         │ SET GAIN TO 2.5 TIMES  │
                  │         └───────────┬────────────┘
                  │◄────────────────────┘
                  ▼
        ┌────────────────────┐
        │  START FAN MOTOR   │────S305
        └─────────┬──────────┘
                  │
           ┌──────▼───────┐
           │    STOP      │
           └──────────────┘
```

# FIG. 7

# FIG. 8

EP 2 385 619 A2

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008054812 A